# EUROPEAN PATENT APPLICATION

(11) **EP 0 853 394 A2**
(43) Date of publication of application: **15.07.1998**
(21) Application number: 98100460.9
(22) Date of filing: 13.01.1998
(51) Int. Cl.: H04B 10/08

(54) **Method and apparatus for monitoring a failure of an optical signal**

(30) Priority: 13.01.1997 JP 4075/97
(71) Applicant: NEC CORPORATION, Tokyo (JP)
(72) Inventor: Takeshita, Hitoshi, Minato-ku, Tokyo (JP); Henmi, Naoya, Minato-ku, Tokyo (JP); Hasegawa, Satoshi, Minato-ku, Tokyo (JP)
(74) Representative: VOSSIUS & PARTNER

(57) **Abstract**

In an optical signal failure monitoring apparatus for monitoring a failure of an optical signal of a signal wavelength (λ ₁), a calculating circuit (703) calculates an optical S/N ratio of a power of the optical signal to another power of a spontaneous emission light of a different wavelength (λ _{N+1}) which is different from the signal wavelength. A detecting circuit (704) detects the failure of the optical signal to produce a failure detection signal when the optical S/N ratio is less than a predetermined value. Preferably, the calculating circuit calculates, as the optical S/N ratio, a difference given by subtracting the power of the spontaneous emission light from the power of the optical signal. Detection of the power of the optical signal may be carried out instead of detection of the optical S/N ratio in the calculating circuit. In this case, the detecting circuit detects the failure of the optical signal and produces the failure detection signal when the power of the optical signal is less than the predetermined value.

## Description

This invention relates to an optical signal failure monitoring method and apparatus for monitoring a failure of an optical signal of a signal wavelength for use in an optical network carrying out optical communication including optical exchange and to an optical network system carrying out optical communication with optical signal failure monitoring and restoring functions.

As is known in the art, the failure of the optical signal is, for example, an optical loss of the optical signal (namely, OLOS: Optical Loss of Signal), an optical signal degradation (namely, OSD: Optical Signal Degradation), an offset of the signal wavelength of the optical signal (namely, OLOW: Optical Loss of Wavelength) or the like.

Traditionally, a transmission path switching operation in an optical network established on the basis of the SONET (Synchronous Optical Network)/SDH (Synchronous Digital Hierarchy) standard is generally executed by the steps of terminating a high-speed optical signal in a line layer by a DCS (Digital Cross Connect Switch), switching, and thereafter multiplexing again into the optical signal. At this time, in order to assure reliability of link connection, detection is made of the LOS (Loss of Signal) with reference to presence or absence of the optical signal, as mentioned in GR-253-CORE ISSUE 1, December 1994 describing the Bellcore Standard. Alternatively, by evaluating an SOH (Section Overhead) or an LOH (Line Overhead), detection is made of an LOF (Loss of Prame), an LOP (Loss of Pointer), or a bit error rate (BER).

In recent years, an OXC (Optical Cross Connect) enabling the optical signal itself to be directly subjected to the transmission path switching operation without electrically terminating the optical signal has been proposed and is being considered for an application to an actual system. While the path switching operation by the DCS is carried out via optoelectric conversion (O/E conversion), DEMUX, switching, MUX, and electrooptic conversion (E/O conversion), the OXC requires switching alone so that the path switching operation can be carried out at a high speed. In addition, DEMUX and MUX of an electrical signal are unnecessary so that a hardware amount upon establishment of the system is reduced per an optical signal transmission rate. Therefore, it is possible to reduce the cost and the size of the system. Thus, a superior function utilizing the advantages of the optical signal is provided.

Consideration will be made about the case where the transmission path switching operation is carried out in the SONET/SDH standard optical network by the OXC as mentioned above. If any failure occurs in the optical network with the OXC, the OXC is required to perform detection and identification of the failure (for example, signal light loss resulting from optical fiber cut, signal light quality deterioration resulting from a defect of an optical repeater amplifier as well as restoration corresponding to the type of the failure. If it is tried to detect the network failure by the use of a frame overhead of the SONET/SDH standard currently used, the OXC is inevitably required to terminate a section or a line. If the failure occurs in a particular line including the OXC, the OXC is required to carry out reading and writing of network failure information (AIS: Alarm Indication Signal) from the frame overhead in order to report occurrence of the failure to an end user using the line in question.

However, the OXC dealing with a high-density multiplexed optical signal requires large-scale hardware in order to retrieve the network failure information from the frame overhead of the optical transmission signal. Besides, exclusively for the purpose of reading the network failure monitoring information, it is necessary to electrically terminate the multiplexed optical signal, to read the frame overhead, and to carry out multiplexing again into the optical signal. The process time for the above-mentioned operation per node becomes a bottleneck. As a result, upon occurrence of the failure within the network, excessively long time is required before the failure is reported to the end user. Thus, restoration from the failure is unfavorably delayed.

In the SONET, it is specified that monitoring of the failure in the line layer is carried out by referring to the frame overhead at a stage where the optical transmission signal is converted into an electric signal and demultiplexed to an STS-1 or STS-3C level. For example, if the technique for an optical transmission system as disclosed in Japanese Unexamined Patent Publication (JP-A) 7-264224 is applied, reduction in circuit scale is achieved by sharing a failure monitoring circuit at the STS-1 and the STS-3C levels. However, the OXC is characterized in that the optical signal is directly subjected to the path switching operation without electrically terminating the optical signal. Therefore, if the above-mentioned technique of the optical transmission system is applied, electrical termination will be carried out in order to refer to the frame overhead. In this event, the superior characteristic of the OXC can not be fully utilized.

In order to report the AIS to a downstream network node, a conventional practice is to carry out WDM (Wavelength Division Multiplexing) by assigning a wavelength band different from that of primary signal light or to carry out sub-carrier multiplexing (SCM) upon a primary signal. Generally, for maintenance and management of an overall network, a network management OS (Operating System) is installed. Upon occurrence of the failure, the management OS at each network node performs restoration from the failure by operating a protection system to carry out restoration from the failure by link connection arrangement with reference to the AIS.

However, in either of the WDM and the SCM, following problems are inevitable.

In case of the WDM, the AIS is assigned out-of-band of the primary signal. This requires functions of terminating the AIS per OXC, rewriting the AIS, and wavelength-multiplexing upon the primary signal. Upon restoration from the failure occurring in the network, AIS processing times at the respective nodes are accumulated to cause the latency proportional thereto. It is therefore difficult to shorten a restoration time at an end-user-to-end-user level.

Japanese Unexamined Patent Publication (JP-A) 6-21896 discloses a method of reporting the AIS downstream in an optical repeater transmission system having a primary signal wavelength band of 1.55 µm and using a plurality of stages of EDFAs (Erbium Doped Fiber Amplifier) as optical repeater amplifiers. Specifically, a 1.48 µm wave of a signal light excitation source mounted in the EDFA is converted into a FSK (Frequency Shift Keying) wave to be transmitted downstream. However, in this method, hardware for FSK conversion is essential for each EDFA arranged in the optical repeater transmission system. In addition, the frequency used in the FSK conversion must fall within a spontaneous emission band of the 1.48 µm excitation light source mounted in the EDFA. Therefore, high-speed AIS reporting is difficult to expect. Consideration is further made about the case where a plurality of wavelength paths are present in a single fiber (for example, where a communication path is assigned to a wavelength and a plurality of communication paths are arranged in the single fiber) and the failure occurs only in several ones of the wavelength paths. In this event, the wavelengths for the AIS, equal in number to the faulty paths, are inevitably required. Therefore, it is difficult to utilize this technique to the introduction of the OXC into the system.

On the other hand, in case of the SCM, the AIS can be assigned in-band of the primary signal if the subcarrier frequency is assigned to each wavelength path. Therefore, no latency is caused. However, it is necessary to rewrite and re-multiplex the AIS at every termination of optical links. This results in an increase in hardware amount upon establishment of the system. In addition, an interval between adjacent wavelength channels is reduced following an increase in number of multiplexed wavelengths of the primary signal. Therefore, a wavelength filter for demultiplexing the primary signal light having been subjected to the WDM is required to have strict performance.

Upon monitoring of the link connection, if use is made of the SONET/SDH standard specifying frame processing by electrically terminating the optical signal, the optical transmission signal speed is high. Correspondingly, the network failure restoration time or the path switching operation time is regulated by the frame processing time, not by the performance of the optical device. This constitutes a bar to the introduction of the OXC into the system.

As described, for example, in Japanese Unexamined Patent Publication (JP-A) 5-276120, the signal loss signal (LOS) in the SONET/SDH standard is defined so as to be detected when the optical signal is received by an optical receiver such as a photodetector (PD) to produce an electric signal containing consecutive same code patterns which last at least for a predetermined time period. Specifically, discrimination is carried out between digitized binary potentials (H level, L level). For the H level and the L level, a plurality of levels can be selected, for example, a TTL level and an ECL level. However, the optical signal to be actually monitored has no concept such as potentials in the electric signal and a digital signal can be represented only by presence or absence of the optical intensity.

In case where the optical amplifier such as the EDFA is connected as a preceding stage of the optical receiver, the optical amplifier generally has an APC (Automatic Power Control) function in the manner described in Japanese Unexamined Patent Publication (JP-A) No. 7-64134. Even if the failure occurs upstream of the optical amplifier and the optical signal is lost, the output light intensity of the optical repeater amplifier is kept constant. Therefore, the LOS may possibly be failed to be recognized. Specifically, if a spontaneous emission intensity is increased to the order of a signal light intensity by the APC function, an LOS identifier at a succeeding stage can not discriminate between the spontaneous emission (ASE: Amplified Spontaneous Emission) and the signal light. In this event, the LOS can not be detected although the optical signal is actually lost.

For example, Japanese Unexamined Patent Publication (JP-A) No. 7-79201 discloses a method of interrupting, upon loss of the transmission signal, the spontaneous emission by interrupting the excitation light of the optical repeater amplifier in order to improve an optical S/N ratio. However, this method can not be used in case where WDM communication is performed and can not serve as network failure monitoring means in the OXC. Therefore, even if the protection system for restoration from a link failure is installed in the network, normal operation is not expected in *this* technique. Therefore, it is presumed that the restoration from the link failure is delayed and the reliability of the link connection can not be maintained.

In addition, in order to introduce the oxc into the current optical network, it is necessary to avoid conflict between an automatic restoration and protection system (APS: Automatic Protection System) as network failure restoring means for the SONET/SDH standard, and protection in an optical layer (which is not a time-multiplex-oriented layer such as a section layer of the SONET/SDH standard but a wavelength/space-multiplex-oriented layer dealing with the optical signal and carrying out electrical processing in synchronism without obtaining and adding information from and to the optical signal) newly provided by the OXC. Even if the SONET/SDH standard will be extinguished from an ideal form of a future optical network, the SONET/SDH standard is worldwide spread in a current status and its property must be used at least for the time being. In addition, immediate transition from the automatic restoration and protection system (APS) to the OXC protection system is difficult in view of the cost also. Therefore, coexistence of the protection in the optical layer using the OXC and the automatic restoration and protection system (APS) is required at least for the time being.

At any rate, if the introduction into the actual optical network is supposed, the above-mentioned various problems inhibit the OXC from fully exhibiting its performance although it has excellent characteristics to enable reduction in hardware amount per optical transmission signal upon establishment of the system and to enable high-speed path switching operation. In order that the OXC fully exhibits its performance, it is essential to develop a method and a system for monitoring an optical signal failure, adapted to an optical network capable of dealing with a high-density multiplexed signal with compatibility with the SONET/SDH standard maintained, as well as to provide hardware capable of carrying out out quick restoration from the network failure without any conflict with the automatic restoration and protection system (APS) of the SONET/SDH standard.

In order to solve the above-mentioned problems, it is an object of this invention to provide a method and an apparatus for monitoring an optical signal failure, which enables an OXC to fully exhibit its performance and which is adapted to an optical network capable of dealing with a high-density multiplexed signal with compatibility with the SONET/SDH standard maintained, as well as to provide hardware capable of carrying out quick restoration from the network failure without any conflict with the automatic protection system (APS) of the SONET/SDH standard.

An optical signal failure monitoring method to which a first aspect of this invention is applicable is for monitoring a failure of an optical signal of a signal wavelength.

According to the first aspect of this invention, the method comprises the steps of: calculating an optical S/N ratio of a power of the optical signal to another power of a spontaneous emission light of a different wavelength which is different from the signal wavelength; and detecting the failure of the optical signal to produce a failure detection signal when the optical S/N ratio is less than a predetermined value.

The failure of the optical signal may be an optical loss of the optical signal. In this case, the detecting step produces the failure detection signal representing that the failure is the optical loss of the optical signal.

Alternatively, the failure of the optical signal is an optical signal degradation. In this event. the detecting step produces the failure detection signal representing that the failure is the optical signal degradation.

As a further alternative, the failure of the optical signal is an offset of the signal wavelength of the optical signal. In this case, the detecting step produces the failure detection signal representing that the failure is the offset of the signal wavelength of the optical signal.

Preferably, the calculating step is for calculating, as the optical S/N ratio, a difference given by subtracting the power of the spontaneous emission light from the power of the optical signal.

An optical signal failure monitoring method to which a second aspect of this invention is for monitoring a failure of an optical signal of a signal wavelength.

According to the second aspect of this invention, the method comprises the steps of: detecting a power of the optical signal; and detecting the failure of the optical signal to produce a failure detection signal when the power of the optical signal is less than a predetermined value.

The failure of the optical signal may be an optical loss of the optical signal. In this case, the latter detecting step produces the failure detection signal representing that the failure is the optical loss of the optical signal.

Alternatively, the failure of the optical signal is an optical signal degradation. In this event, the latter detecting step produces the failure detection signal representing that the failure is the optical signal degradation.

As a further alternative, the failure of the optical signal is an offset of the signal wavelength of the optical signal. In this case, the latter detecting step produces the failure detection signal representing that the failure is the offset of the signal wavelength of the optical signal.
e signal wavelength of the optical signal;

An optical signal failure monitoring apparatus to which a third aspect of this invention is for monitoring a failure of an optical signal of a signal wavelength.

According to the third aspect of this invention, the apparatus comprises: calculating means for calculating an optical S/N ratio of a power of the optical signal to another power of a spontaneous emission light of a different wavelength which is different from the signal wavelength; and detecting means for detecting the failure of the optical signal to produce a failure detection signal when the optical S/N ratio is less than a predetermined value.

The failure of the optical signal may be an optical loss of the optical signal. In this case, the detecting means produces the failure detection signal representing that the failure is the optical loss of the optical signal.

Alternatively, the failure of the optical signal is an optical signal degradation. In this event, the detecting means produces the failure detection signal representing that the failure is the optical signal degradation.

As a further alternative, the failure of the optical signal is an offset of the signal wavelength of the optical signal. In this case, the detecting means produces the failure detection signal representing that the failure is the offset of the signal wavelength of the optical signal.

Preferably, the calculating means is for calculating, as the optical S/N ratio, a difference given by subtracting the power of the spontaneous emission light from the power of the optical signal.

An optical signal failure monitoring apparatus to which a fourth aspect of this invention is for monitoring a failure of an optical signal of a signal wavelength.

According to the fourth aspect of this invention, the apparatus comprises: first detecting means for a power of the optical signal; and second detecting means for detecting the failure of the optical signal to produce a failure detection signal when the power of the optical signal is less than a predetermined value.

The failure of the optical signal may be an optical loss of the optical signal. In this case, the detecting means produces the failure detection signal representing that the failure is the optical loss of the optical signal.

Alternatively, the failure of the optical signal is an optical signal degradation. In this event, the detecting means produces the failure detection signal representing that the failure is the optical signal degradation.

As a further alternative, the failure of the optical signal is an offset of the signal wavelength of the optical signal. In this case, the detecting means produces the failure detection signal representing that the failure is the offset of the signal wavelength of the optical signal.
Fig. 1 is a view showing correspondence of signals required in detection of optical signal failure in a SONET/SDH layer and an optical layer within an optical network in order to describe an optical signal failure monitoring method according to this invention;
Fig. 2 is a view for describing a procedure of reporting a network failure in a conventional optical network system using a DCS;
Fig. 3 is a view for describing reporting of a network failure (including monitoring and restoration of the network failure) in one example of an optical network system installed with an optical signal failure monitoring apparatus according to this invention and using an OXC;
Fig. 4 is a view for describing reporting of a network failure (including monitoring and restoration of the network failure) in an optical network system with a signal regenerator located upstream of the OXC as a modification of the optical network system in Fig. 3;
Fig. 5 is a view for describing reporting of a network failure (including monitoring and restoration of the network failure) in an optical network system with a signal regenerator located upstream of the OXC and having a function of detecting an optical signal failure detection signal as at least one of an optical signal loss signal (OLOS), an optical signal wavelength offset signal (OLOW), and an optical S/N ratio degradation signal (OSD) and a network failure detection signal (AIS-O) producing function, as another modification of the optical network system in Fig. 3;
Fig. 6 is a view for describing reporting of a network failure (including monitoring and restoration of the network failure) in an optical network system with a signal regenerator located upstream of the OXC as a modification of the optical network system in Fig. 3;
Fig. 7 is a view for describing the timing of activation of restoration of the network failure by a combination of an automatic restoration and protection system (APS) and the OXC applied to an optical signal failure monitoring apparatus and an optical network system according to this invention;
Fig. 8 is a view for describing the structure and the function of an optical signal failure detecting unit for an optical signal failure detection signal used in the optical signal failure monitoring apparatus of this invention;
Fig. 9 is a view for describing a basic structure of the OXC with the optical signal failure detecting unit illustrated in Fig. 8;
Fig. 10 is a view showing one example of an optical network system having network failure monitoring and restoring functions with the OXC illustrated in Fig. 9:
Fig. 11 is a view showing another example of the optical network system having network failure monitoring and restoring functions with the OXC illustrated in Fig. 9; and
Fig. 12 is a view showing another example of the optical network system having network failure monitoring and restoring functions with the OXC illustrated in Fig. 9.

Typically, the OXC deals with a high-speed optical signal on the order of Gb/s. It is assumed that the failure monitoring/restoring method in the conventional optical network based on the SONET/SDH standard mainly dealing with a low-speed signal as compared with the optical signal is Straightforwardly introduced into the optical network using the OXC. In this event, the signal rate to be dealt with is several tens to several hundreds of times high. Therefore, exclusively for the purpose of reading network management information assigned as overhead in the frame of the optical transmission signal, the optical signal must be converted into the electric signal. Due to the processing time required to read the overhead in the above-mentioned manner, the performance of the OXC can not be fully exhibited. This results in inconsistency with the intention of the network architecture utilizing the optical characteristics and introduced to cope with the increase in amount of information communication. Such tendency is assumed to become noticeable following development of a large-scale network. Therefore, in the optical layer (which is not a time-multiplex-oriented layer such as a section layer of the SONET/SDH standard but a wavelength/space-multiplex-oriented layer dealing with the optical signal and carrying out electrical processing in synchronism without obtaining and adding information from and to the optical signal) dealing with an ultra-high-speed signal, it is required to adopt a new method without using the network failure monitoring/restoring method based on the SONET/SDH standard.

In view of the above, according to this invention, the optical signal failure detection signal in the time-multiplex-oriented SONET/SDH standard is newly re-defined into the optical signal failure detection signal in the wavelength/space-multiplex-oriented optical layer. Monitoring of the primary signal in the optical layer is performed as frame-by-frame monitoring in the SONET/SDH standard with information monitoring on a time axis replaced by information monitoring on a wavelength axis. Specifically, as network failure monitoring items in the section layer of the SONET/SDH standard, the signal loss signal (LOS) for monitoring the signal loss, the LOF (Loss of Frame) for monitoring out-of-synchronization, the LOP (Loss of Pointer), and the BER (Bit Error Rate) for monitoring deterioration in signal quality are newly adopted and re-defined into the optical signal loss signal (OLOS) for detecting the optical signal loss utilizing monitoring of the optical intensity or the optical S/N ratio in the optical layer, the optical signal wavelength offset signal (OLOW) for monitoring signal light wavelength offset by a combination of monitoring results of the optical BPF (Band Pass Filter), the optical S/N ratio, and the optical intensity, and the optical S/N ratio degradation signal (OSD) for monitoring deterioration in optical signal quality by monitoring the optical S/N ratio. Thus, monitoring of the optical signal loss in the optical network is performed.

Now, description will be made in detail as regards a method and an apparatus for monitoring optical signal loss as well as an optical network system in conjunction with embodiments with reference to the drawing.

At first, an outline of the optical signal failure monitoring method according to this invention will briefly be described. In the optical signal failure monitoring method according to this invention, an optical signal failure detection signal in the time-multiplex-oriented SONET/SDH standard is newly re-defined into an optical signal failure detection signal in a wavelength/space-multiplex-oriented optical layer. Monitoring of a primary signal in the optical layer is performed as frame-by-frame monitoring in the SONET/SDH standard with information monitoring on a time axis replaced by information monitoring on a wavelength axis.

Specifically, as network failure monitoring items in a section layer of the SONET/SDH standard (hereinafter simply called a SONET/SDH layer), a signal loss signal (LOS) for monitoring the signal loss, an LOF for monitoring out-of-synchronization, an LOP, and a BER for monitoring deterioration in signal quality are newly adopted and re-defined into an optical signal loss signal (OLOS) for detecting the optical signal loss utilizing monitoring of an optical intensity or an optical S/N ratio in the optical layer, an optical signal wavelength offset signal (OLOW) for monitoring signal light wavelength offset by a combination of monitoring results of an optical BPF, the optical S/N ratio, and the optical intensity, and an optical S/N ratio degradation signal (OSD) for monitoring deterioration in optical signal quality by monitoring the optical S/N ratio. Thus, monitoring of the optical signal loss in the optical network is performed. Herein, it is necessary to provide an optical S/N ratio calculation stage in which an optical S/N ratio is calculated as a ratio of a signal component light intensity in a particular wavelength range of a predetermined width including signal light and a spontaneous emission intensity in another wavelength range having a width equal to the predetermined width of the particular wavelength range but different from the particular wavelength range and to monitor optical signal loss with reference to the optical S/N ratio.

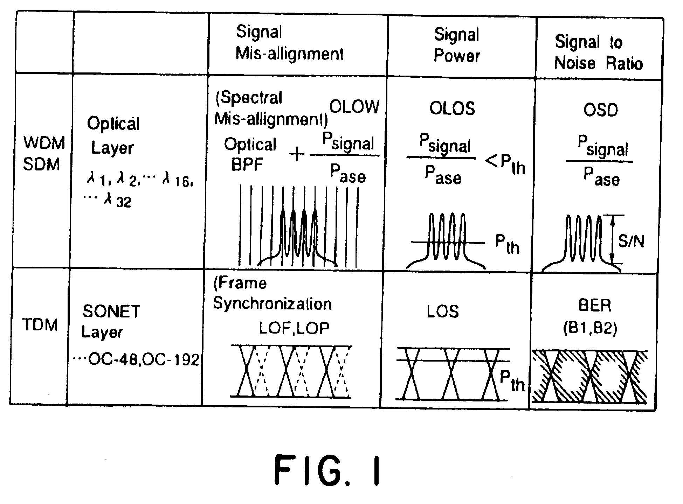

Fig. 1 shows the correspondence of signals required in detection of the optical signal failure in the SONET/SDH layer and the optical layer. Herein, when failure occurs in a particular line within the network upon establishment of the network, the failure is reported downstream by the use of a line alarm indication signal (AIS-L) in the SONET/SDH standard. In the optical layer, a network element detecting the optical signal loss signal (OLOS), the optical wavelength offset signal (OLOW), or the optical S/N ratio degradation signal (OSD) interrupts its optical output to produce a network failure detection signal (AIS-O: Alarm Indication Signal-Optical) for reporting occurrence of the failure to the downstream.

Specifically, when the network element interrupts its optical output, a downstream network element detects the optical signal loss signal (OLOS) and interrupts its optical output. In this manner, a line terminating equipment of the SONET/SDH standard finally detects a signal loss signal (LOS). Thus, the network failure is reported from the optical layer to the SONET/SDH layer. The above-mentioned sequential propagation of network failure information (AIS) is equivalent to that the network element having detected the optical signal loss signal (OLOS), the optical signal wavelength offset signal (OLOW), or the optical S/N ratio degradation signal (OSD) converts the detected signal into the network failure detection signal (AIS-O) in the optical layer and reports it to the line terminating equipment of the SONET/SDH layer. Therefore, by monitoring the optical signal loss in accordance with the signal shown in Fig. 1 and in accordance with its rule, the detection of the optical signal loss on the order of µ sec is possible in the optical layer. This value is several times to several tens of times high as compared with the SONET/SDH layer. Therefore, restoration from the network failure can be carried out at a correspondingly high speed.

As an optical signal failure monitoring apparatus to which the above-mentioned optical signal failure monitoring method is applied, use can be made of a structure comprising optical signal loss signal detecting means for detecting the optical signal loss signal (OLOS) by judging presence or absence of signal light with reference to the optical S/N ratio obtained as a ratio between the signal component light intensity and the spontaneous emission intensity or to the signal component light intensity. Use is also made of a structure comprising optical S/N ratio calculating means for calculating the optical S/N ratio as the ratio between the signal component light intensity and the spontaneous emission intensity, and optical S/N ratio degradation signal detecting means for detecting the optical S/N ratio degradation signal (OSD) representative of degradation of the optical S/N ratio to a predetermined threshold value or less. Alternatively, use may be made of a structure comprising optical signal wavelength offset signal detecting means for detecting the optical signal wavelength offset signal (OLOW) by monitoring wavelength offset of the signal light with reference to the optical S/N ratio obtained as the ratio between the signal component light intensity and the spontaneous emission intensity or to the signal component light intensity. Further alternatively, use may be made of a structure comprising a combination of some of the optical S/N ratio calculating means, the optical signal loss signal detecting means, the optical S/N ratio degradation signal detecting means, and the optical signal wavelength offset signal detecting means (including a combination of all).

In the optical signal failure monitoring apparatus of the above-mentioned structure, use is made of a structure further comprising network failure detection signal producing means for producing, irrespective of information in an electric signal obtained by electrically terminating in synchronism an optical signal with at least one wavelength of the optical signal loss signal (OLOS) wavelength-multiplexed, a network failure detection signal (AIS-O) in an optical layer by interrupting, after detection of the optical signal loss signal (OLOS), the signal light from an output corresponding to an input at which the optical signal loss signal (OLOS) is detected; a structure further comprising network failure detection signal producing means for producing, irrespective of information in an electric signal obtained by electrically terminating in synchronism an optical signal with at least one wavelength of the optical S/N ratio degradation signal (OSD) wavelength-multiplexed, a network failure detection signal (AIS-O) in an optical layer by interrupting, after detection of the optical S/N ratio degradation signal (OSD), the signal light from an output corresponding to an input at which the optical S/N ratio degradation signal (OSD) is detected; or a structure further comprising network failure detection signal producing means for producing, irrespective of information in an electric signal obtained by electrically terminating in synchronism an optical signal with at least one wavelength of the optical signal wavelength offset signal (OLOW) wavelength-multiplexed, a network failure detection signal (AIS-O) in an optical layer by interrupting, after detection of the optical signal wavelength offset signal (OLOW), the signal light from an output corresponding to an input at which the optical signal wavelength offset signal (OLOW) is detected. As a structure which can cope with a combination of these functions, for example, in case of inclusion of all the functions, use is made of a structure further comprising network failure detection signal producing means for producing, irrespective of information in an electric signal obtained by electrically terminating in synchronism an optical signal with at least one wavelength of any one of the optical signal loss signal (OLOS), the optical S/N ratio degradation signal (OSD), and the optical signal wavelength offset signal (OLOW) wavelength-multiplexed, a network failure detection signal in an optical layer by interrupting, after detection of any one of the optical signal loss signal (OLOS), the optical S/N ratio degradation signal (OSD), and the optical signal wavelength offset signal (OLOW), the signal light from an output corresponding to an input at which any one of the optical signal loss signal (OLOS), the optical S/N ratio degradation signal (OSD), and the optical signal wavelength offset signal (OLOW) is detected. Also preferably, any one of the above-mentioned optical signal loss monitoring apparatuses is provided in an optical repeater amplifier, an optical cross-connect system, or a signal regenerator.

Each of the optical signal failure monitoring apparatuses of the above-mentioned structures can be installed in an optical repeater amplifier, an optical cross connect device, or a signal regenerator which constitute the optical network system. In other words, it is recommended to establish the optical network system which includes the optical repeater amplifier and the optical cross connect device of the above-mentioned structure, and the line terminating equipment of the SONET/SDH standard and which deals with the optical signal as a multiplexed signal with one or more wavelengths multiplexed in a single optical fiber.

In the above-mentioned optical network system, it is preferred that the optical signal failure within the network is monitored by the use of a signal loss signal (LOS), the optical signal loss signal (OLOS), or the network failure detection signal (AIS-O) in an optical layer instead of a line alarm indication signal (AIS-L: Alarm Indication Signal-Line) in the SONET/SDH section layer, the line alarm indication signal (AIS-L) being assigned as a line overhead in order to report, upon detection of the network failure in the SONET/SDH section layer, occurrence of the network failure to the line terminating equipments located downstream of the network failure detecting position, i.e., without reading the line alarm indication signal (AIS-L) and adding the line alarm indication signal (AIS-L) to an optical signal delivered again to the line terminating equipments to report the network failure to the line terminating equipments.

In the above-mentioned optical network system, it is preferred that the network failure in the optical layer is reported from the optical layer to the SONET/SDH section layer by converting the optical signal loss signal (OLOS) into the network failure detection signal (AIS-O) to make the line terminating equipment detect the signal loss signal (LOS); that the system comprises a signal regenerator of the SONET/SDH standard according to the structure of the above-mentioned optical signal failure monitoring apparatus and located upstream of the network failure detecting position of the optical cross-connect system, at least one of the line terminating equipment of the SONET/SDH standard arranged between the optical cross-connect system and the signal regenerator, and an automatic restoration and protecting system (APS) of the SONET/SDH standard for carrying out restoration from the network failure when activated by making the line terminating equipments recognize a line alarm indication signal (AIS-L) which is produced to report occurrence of the network failure from the signal regenerator to downstream ones of the line terminating equipments upon detection of the network failure by the signal regenerator; that restoration from the network failure is carried out by an optical path switching operation of the optical cross-connect system; and that network control information is assigned to a wavelength range different from that of a primary signal in the optical signal to carry out communication of network information between nodes of the optical cross-connect system or between nodes of the optical cross-connect system and the line terminating equipments.

In any one of the above-mentioned optical network systems, it is preferred that the signal regenerator produces the network failure detection signal (AIS-O) in the optical layer and reports the network failure to the optical repeater amplifier or the optical cross-connect system downstream of the signal regenerator so as to carry out restoration from the network failure by the optical path switching operation of the optical cross-connect system in the optical layer or to carry out restoration of the network failure by the automatic restoration and protection system (APS) activated when the network failure in the optical layer is reported from the optical layer to the SONET/SDH layer by converting the optical signal loss signal (OLOS) into the network failure detection signal (AIS-O) to make the line terminating equipments detect the signal loss signal (LOS); that the optical cross-connect system achieves the optical path switching operation after the restoration from the network failure by the automatic restoration and protection system (APS) has failed or after the delay of a predetermined time period including zero second following activation of the automatic restoration and protection system (APS) so that conflict is avoided between the restoration from the network failure by the automatic restoration and protection system (APS) in the SONET/SDH-standard section layer and the restoration from the network failure by the optical cross-connect system in the optical layer; or that the optical cross-connect system makes its nodes read the network management information in a different wavelength during operation of the automatic restoration and protection system (APS) to prepare for the restoration from the network failure by the optical path switching operation, and carries out the optical path switching operation after unsuccessful restoration of the network failure or after the delay of a predetermined time period including zero second, so as to shorten the time from occurrence of the network failure and completion of the restoration from the network failure by the optical path switching operation.

The above-mentioned implementations can be achieved by simple hardware and are therefore advantageous in reduction in size of the system and in cost. Unlike the conventional signal loss signal (LOS) detection in which the binary potentials (H level, L level) are discriminated to analyze the signal pattern and detection takes place upon occurrence of the consecutive same code patterns lasting for at least a predetermined time period or upon no recognition of a clock signal extracted from the signal, signal loss and deterioration are simply detected with reference to presence or absence of the light intensity. Thus, this method is adapted to the optical network.

Generally, as a higher-speed signal is dealt with, high-speed and complicated hardware is required for signal pattern analysis and its implementation becomes difficult. Particularly in the optical network, if an existing technique is applied to deal with a high-speed signal on the order of Gb/s, establishment of the system is complicated. In addition, due to regulation by the signal analysis processing speed, the performance which matches the capability of the optical transmission may not be exhibited.

Accordingly, it is desired in the optical network system to realize detection of signal loss and deterioration by the use of relatively simple hardware. In this point of view, rather than the signal pattern analysis or the clock detection, monitoring using the light intensity is advantageous in that detection of signal loss and deterioration is achieved by simple hardware because it is simply required, for example, to monitor the optical current of a photodetector output.

No problem will arise if the OXC protection alone is used as a method of restoration from the optical signal loss within the network. On the other hand, in combination with an automatic restoration and protection system (APS) of the SONET/SDH standard, conflict therebetween must be avoided. In this respect, the oxc protection is started after the time delay of at least 0 second following completion of start of the automatic restoration and protection system (APS). Therefore, it is possible to avoid the conflict between the automatic restoration and protection system (APS) and the oxc protection.

Furthermore, communication of network control information between network nodes is carried out in a wavelength range different from that of the primary signal. The line terminating equipment as a starting point of the automatic restoration and protection system (APS) sends the control information to the OXC simultaneously with the start of the automatic protection system (APS) so as to make the OXC start preparation of the protection during operation of the automatic restoration and protection system (APS). Thus, it is possible to shorten the time period from occurrence of the network failure to completion of the OXC protection.

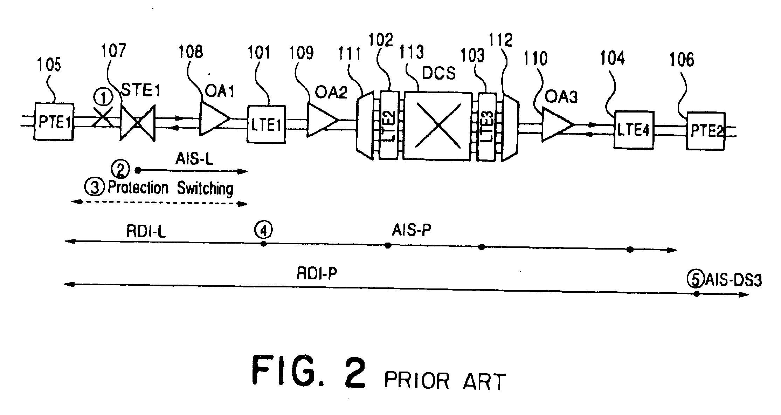

Fig. 2 shows an existing optical network system based on the SONET/SDH standard with the failure detected therein. Upon occurrence of the failure in the network, network failure information (AIS) is reported to each network element through the following steps to trigger the automatic restoration and protection system (APS).

As a main portion of the optical network system, a line terminating equipment (LTE2: Line Terminating Equipment 2) 102 of the SONET/SDH standard, a wavelength demultiplexer (DEMUX) 111, an optical repeater amplifier (OA2: Optical Amplifier 2) 109, a line terminating equipment (LTE1) 101 of the SONET/SDH standard, an optical repeater amplifier (OA1) 108, a section terminating equipment (STE1) 107 of the SONET/SDH standard, and a path terminating equipment (PTE1: Path Terminating Element 1) 105 of the SONET/SDH standard, which are connected to one side of a digital cross connect (DCS) 113 in this order away from it. To the other side of the digital cross connect (DCS) 113, a line terminating equipment (LTE3) 103 of the SONET/SDH standard, a wavelength multiplexer (MUX) 112, an optical repeater amplifier (OA3) 110, a line terminating equipment (LTE4) 104 of the SONET/SDH standard, and a path terminating equipment (PTE2) 106 of the SONET/SDH standard are connected in this order away from it.

Herein, the optical repeater amplifier (OA1) 108 in the section layer detects the failure at ① in the figure. At ② , the optical repeater amplifier (OA1) 108 delivers the line alarm indication signal (AIS-L) to the line terminating equipment (LTE2) 102 to report detection of the failure to the line layer. At ③ , the line terminating equipment (LTE2) 102 executes protection switching in accordance with the automatic restoration and protection system (APS) protocol but the execution is failed because of occurrence of the failure in the line.

At ④ , the line terminating equipment (LTE2) 102 converts the line alarm indication signal (AIS-L) thus received into an AIS-P (Alarm Indication Signal - STS Path) for delivery to the path terminating equipment (PTE2) 106 downstream of the data stream to report to the path layer that all the paths associated with the line are invalid. Simultaneously, an RDI-L (Remote Defect Indication-Line) is delivered to the upstream path terminating equipment (PTE1) 105 to report that the data transmitted downstream by the path terminating equipment (PTE1) 105 are invalid.

Furthermore, at ⑤ , the path terminating equipment (PTE2) 106 having received the AIS-P converts it into an AIS-DS3 to report to the user the invalidation of the data being received. Simultaneously, an RDI-P (Remote Defect Indication-Path) is delivered to the upstream path terminating element (PTE1) 105 to report to an end user that the transmission data are not normally transmitted.

Thus, in the existing optical network system based on the SONET, optical fiber communication is carried out only in a portion between the line terminating equipment (LTE1) 101 and the line terminating equipment (LTE2) 102 in Fig. 2. Upon occurrence of the failure, it is necessary to successively convert the network failure information (AIS), as described in conjunction with ① to ⑤ , in order to report occurrence of the failure to a superior layer.

To carry out the above-mentioned conversion with the optical signal kept unchanged is technically difficult in the current status. Therefore, applying the conventional network failure detection by WDM or SCM, implementation is achieved by O/E conversion (optoelectric conversion), electrical processing, and E/O conversion (electrooptic conversion) back into the optical signal. In this approach, the increase in network scale brings about accumulation of the time required in data processing in each network element accompanying the conversion of the network failure information (AIS). Therefore, with respect to the time reached between the path terminating element (PTE1) 105 and the path terminating element (PTE2) 106 as a path layer, the latency is increased between failure recognition and failure detection at the optical repeater amplifier (OA1) 108.

In the SCM, it is necessary to assign the subcarrier frequency to every wavelength path and to perform the SCM at each terminal point for each wavelength channel. Therefore, hardware amount to be mounted upon establishment of the system is increased so that the reduction in size is difficult. In addition, the primary signal subjected to the SCM has an optical spectrum having a spectral width widened by a modulation side band correspondingly. Therefore, if the number of wavelengths multiplexed is increased, an optical filter for wavelength demultiplexing is required to have a high performance.

In the WDM, the network failure information (AIS) can be assigned only out-of-band of the primary signal. Therefore, the network failure information (AIS) can not be transmitted for each path. For example, in the situation where a single fiber is assigned with different paths, N in number, it is assumed that the failure occurs in k paths (k = 1 to N-1). In this event, the network failure information (AIS) must be delivered in k directions. To this end, the wavelengths, N in number, are required for assignment to the network failure information (AIS). As a result, different wavelengths for the network failure information (AIS) must be provided for respective paths.

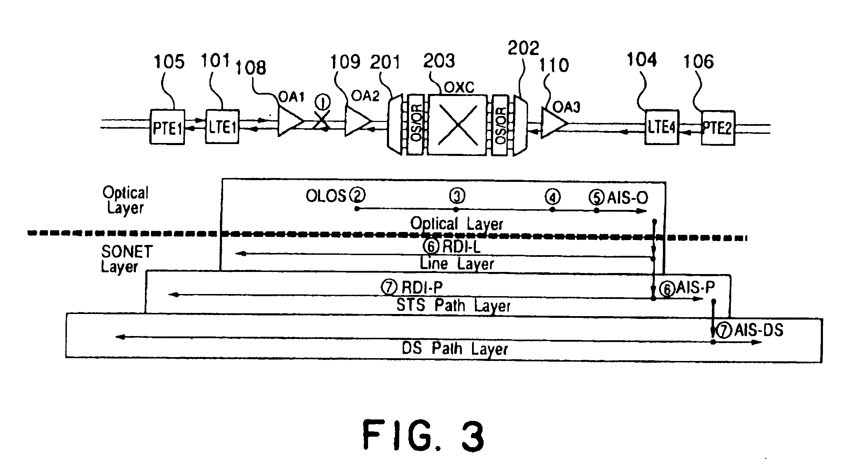

In order to solve the above-mentioned problems, the line alarm indication signal (AIS-L) is no longer used for detection of the failure within the optical network system in the OXC. Instead, detection of the failure is carried out by the use of the network failure detection signal (AIS-O) illustrated in Fig. 3.

As a main portion of the optical network system, a wavelength demultiplexer 201, a signal regenerator 301 of the SONET/SDH standard, an optical repeater amplifier (OA1) 108, a line terminating equipment (LTE1) 101 of the SONET/SDH standard, and a path terminating equipment (PTE1) 105 of the SONET/SDH standard are connected to one side of an OXC 203 in this order away from it. To the other side of the oxc 203, a wavelength multiplexer 202, an optical repeater amplifier (OA2) 109, an optical repeater amplifier (OA3) 110, a line terminating equipment (LTE4) 104 of the SONET/SDH standard, and a path terminating equipment (PTE2) 106 of the SONET/SDH standard are connected in this order away from it.

Herein, the optical repeater amplifier (OA2) 109 in the section layer detects the failure at ① . At ② , the optical repeater amplifier (OA2) 109 delivers the optical signal loss signal (OLOS) in the optical layer to the OXC 203 to report detection of the failure. When the OXC 203 detects the optical signal loss signal (OLOS) at ③ , the signal light from the output is immediately interrupted at ④ . At ⑤ , the network failure is reported to the downstream network element by the network failure detection signal (AIS-O) in the optical layer.

Such intentional interruption of the signal light from the optical output to report the network failure to the downstream network element in the optical layer is defined as the network failure detection signal (AIS-O). Specifically, it is equivalent to that the network element having detected the optical signal loss signal (OLOS) in the optical layer converts it into the network failure detection signal (AIS-O) to report the network failure to the downward network element.

Thus, the network failure detection signal (AIS-O) is propagated downstream. In the OS/OR replacing the line terminating equipment (LTE2) 102 and supporting the optical transmission function alone, the signal loss signal (LOS) is reported to the SONET/SDH layer (its line layer). Herein, the OS/OR replacing the line terminating equipment (LTE2) 102 serves as a starting point of the automatic restoration and protection system (APS) of the SONET to carry out restoration from the failure in the SONET/SDH.

In the SONET/SDH layer, RDI-L and AIS-P are transmitted at ⑥ to the line layer and to the STS-path layer, respectively. At ⑦ , the RDI-P and the AIS-DS are transmitted to the STS-path layer and the DS-path layer, respectively.

Herein, the optical repeater amplifier (OA) or the oxc 203 in the optical layer can detect the optical signal loss signal (OLOS) on the order of µ sec. The OXC 203 need not perform processing of the network failure information (AIS) of the SONET/SDH standard. The failure detection rate is several times to several tens of times high as compared with the case described in conjunction with Fig. 2. Therefore, it is unnecessary to subject the SONET/SDH standard network failure information (AIS) for network management to SCM upon the primary signal or WDM by assignment to the wavelength different from that of the primary signal. Thus, detection of the failure within a high-speed optical network system is enabled by the use of simple hardware. In case where failure occurs only in several ones of a plurality of wavelength paths within the fiber, it is possible to interrupt the signal light from the output of each of those faulty paths alone because the OXC 203 detects the optical signal loss signal (OLOS). Restoration from the failure is performed for the faulty paths alone by propagation of the network failure detection signal (AIS-O).

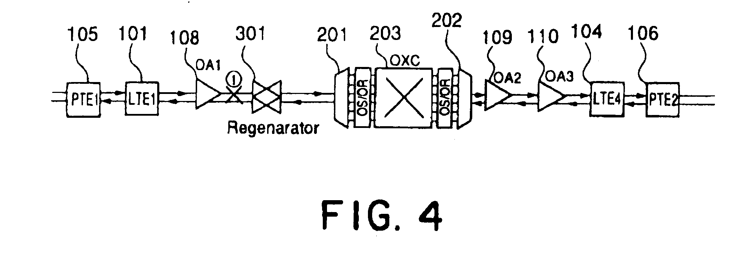

In the structure in which the SONET/SDH-standard signal regenerator 301 is inserted nearer upstream of the OXC 203 than a network failure detecting position as illustrated in Fig. 4, the signal regenerator 301 delivers some output downstream irrespective of presence or absence of the input supplied thereto. Herein, on the other side of the oxc 203, the optical repeater amplifier (OA) 109 is interposed between the wavelength multiplexer 202 and the optical repeater amplifier (OA3) 110.

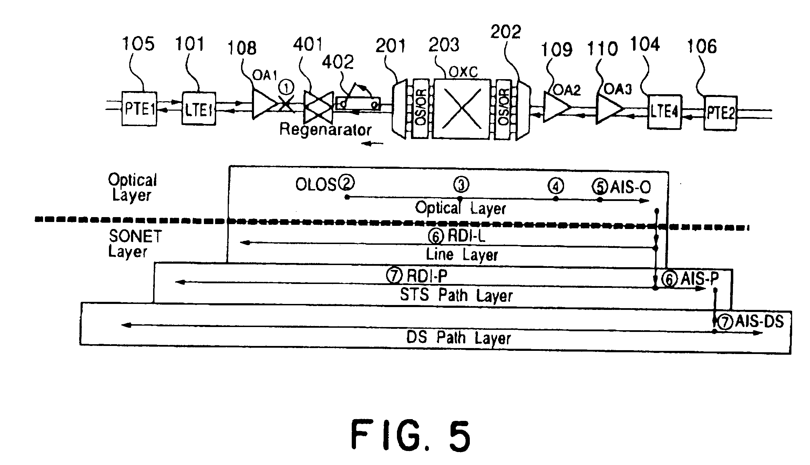

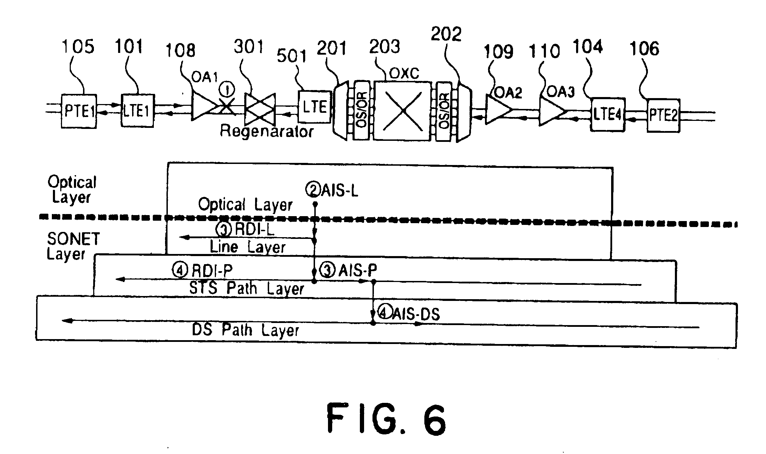

In the above-mentioned structure, the optical repeater amplifier (OA) and the OXC 203 located downstream can not detect the optical signal loss signal (OLOS) or the network failure detection signal (AIS-O). In this connection, as illustrated in Fig. 5, the signal regenerator 301 is replaced by a signal regenerator 401 newly provided with an optical signal loss monitoring function (herein, an optical gate switch 402 connected to the signal regenerator 401 is used) for detecting the optical signal loss signal (OLOS) to interrupt the signal light from the output. Alternatively, as illustrated in Fig. 6, a SONET/SDH-standard line terminating equipment (LTE) 501 connected to the signal regenerator 301 is arranged at the input side of the OXC 203.

In the former case, the OXC 203 detects the optical signal loss signal (OLOS) and produces the network failure detection signal (AIS-O) to report the network failure to the OS/OR replacing the line terminating equipment (LTE2) 102 and supporting the optical transmission function alone. In the latter case, the line terminating equipment (LTE) 501 can detect the failure. In either case, it is possible to achieve restoration from the failure by reporting the network failure to the line layer.

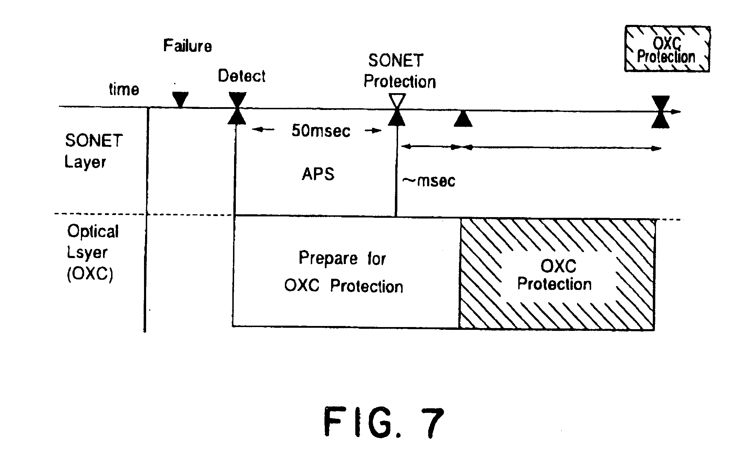

In the meanwhile, in case where the SONET/SDH-standard automatic restoration and protection system (APS) and the oxc protection are used in combination, the conflict therebetween must be avoided. For this purpose, as illustrated in Fig. 7, the automatic restoration and protection system (APS) is at first operated and, thereafter, the OXC protection by an optical path switch is operated for the failure which can not be recovered by the automatic restoration and protection system (APS).

For network management, control information must be transmitted between the nodes. Let the control information be assigned to a wavelength band different from that of the primary signal light. In this event, since the control information is assigned out-of-band from the primary signal light, it is possible to carry out node-to-node communication independently from the automatic restoration and protection system (APS). Therefore, as illustrated in Fig. 7, the control information is transmitted to the OXC simultaneously with the start of operation of the automatic restoration and protection system (APS) so that the OXC performs preparation of the protection during progress of operation of the automatic restoration and protection system (APS). In this manner, it is possible to shorten the time period from occurrence of the network failure to completion of the OXC protection.

In the present-day network using the optical amplifier having the APC function as the optical repeater amplifier, the optical amplifier output is controllably kept constant irrespective of presence or absence of the optical signal. Therefore, simple monitoring of the average light intensity can not provide discrimination between the amplified spontaneous emission (ASE) and the signal light and can not assure reliable detection of the optical signal loss. Specifically, there is a lack of an optical S/N ratio (Signal to Noise Ratio) which is the information related to the relationship between the signal component light intensity and the amplified spontaneous emission (ASE) intensity. Therefore, in case where the amplified spontaneous emission (ASE) intensity in creases by the APC control to approach the optical signal light intensity, the signal loss signal (LOS) can not be accurately detected despite the fact that the optical signal is actually lost. In order to avoid this, the relationship between the signal component light intensity and the amplified spontaneous emission (ASE) intensity is monitored to detect the optical signal loss so that the optical signal loss signal (OLOS) is obtained.

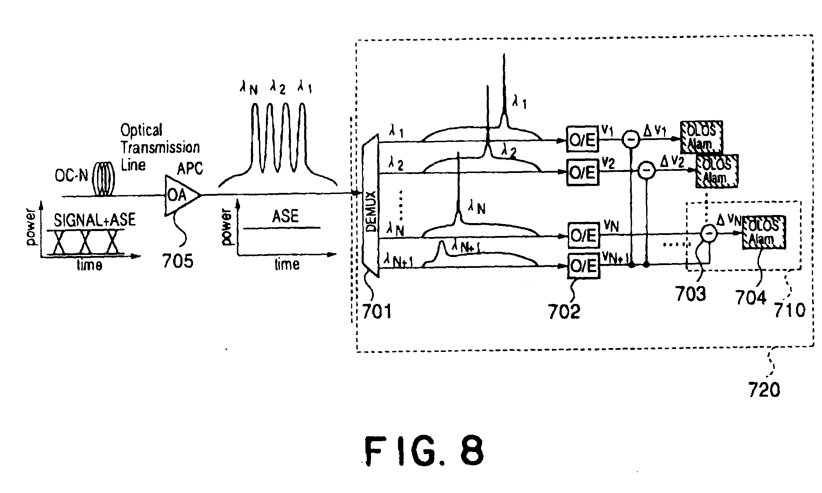

Therefore, detection of the optical signal loss is carried out by monitoring the ratio between the signal component light intensity and the amplified spontaneous emission (ASE) intensity. Such monitoring of the ratio between the signal component light intensity and the amplified spontaneous emission (ASE) intensity is equivalent to monitoring of the optical S/N ratio of the optical signal. Specifically, the optical S/N ratio is not equal to 0 when the optical signal is actually present and is equal to 0 in presence of the amplified spontaneous emission (ASE) alone. It is assumed that the amplified spontaneous emission (ASE) intensity has a wavelength dependency. In this event, if there is a difference between the light intensity of a wavelength λ_{ASE} and the amplified spontaneous emission (ASE) intensity contained in the optical signal having wavelengths λ₁ to λ_{N} as illustrated in Fig. 8, an optical signal loss signal (OLOS) alarm is produced when the ratio output becomes equal to or less than a predetermined threshold value. By the use of the above-mentioned detection of the optical signal loss signal (OLOS), it is possible to accurately detect the presence or absence of the optical signal irrespective of the number of stages of the APC-controlled optical repeater amplifiers (OA) arranged between the network nodes or irrespective of increase of the number of multiplexed wavelengths. Fig. 3 shows the case where the signal light with N wavelengths multiplexed is entirely lost. If only several ones of the N wavelengths are lost, the optical signal loss signal (OLOS) is not detected by the optical repeater amplifier (OA) but the optical signal loss signal (OLOS) is detected by the OXC 203. Therefore, the network failure detection signal (AIS-O) can be individually produced for each optical path. The OS/OR replacing the line terminating equipment (LTE2) 102 can start operation of the automatic protection system (APS). It is noted here that the detection of the signal loss signal (LOS) in the conventional SONET/SDH-standard optical network is carried out by monitoring an electric signal converted from the optical signal to detect the same code patterns which last at least for a predetermined time period.

Now, the optical network system using the optical signal failure monitoring apparatus mentioned above will be described in conjunction with several specific embodiments.

Fig. 8 shows a basic structure of an optical signal failure detecting unit 720 for detecting, as the optical signal failure detection signal, one of the optical signal loss signal (OLOS), the optical signal wavelength offset signal (OLOW), and the optical S/N ratio degradation signal (OSD) mentioned above.

The optical signal failure detecting unit 720 comprises a wavelength demultiplexer 701 having at least N+1 outputs ports and at least one input port, where N is a number of the multiplexed wavelengths of the primary signal light, with each port coupled to an optical fiber. The wavelength demultiplexer 701 is a device having an optical bandpass filtering function. Specifically, supplied with the primary signal light propagating through a single fiber and having N wavelengths λ 1 to λ_{N} (λ_{N} > ... > λ₂ > λ₁) wavelength-multiplexed, the wavelengths λ₁ to λ_{N} are separated one by one at a same wavelength band and a same transmittance and delivered to the N different output ports. The primary signal light with N wavelengths multiplexed is assumed to be an optical signal after passing through an optical transmission path containing at least one APC-controlled optical repeater amplifier 705. It is noted that the (N+1)-th output port defines a transmission center wavelength such that the amplified spontaneous emission (ASE) intensity similar to the amplified spontaneous emission (ASE) intensity contained in the primary signal light having λ₁ to λ_{N} is produced. It is assumed here that the (N+1)-th port has an optical bandpass filtering characteristic similar to that of the 1st to N-th output ports. To the output ports of the wavelength demultiplexer 701, O/E converters 702, (N+1) in total, are independently connected by the optical fibers in one-to-one correspondence.

Each of the O/E converters 702 is supplied with the optical signal through the optical fiber and produces an electric voltage proportional to a time-average light intensity. When the signal light λᵢ after demultiplexing by the wavelength demultiplexer 701 is supplied to the O/E converter 701, the O/E converter 702 produces the output voltage Vᵢ (i = 1, 2, ..., N+1). A subtractor circuit 703 has a subtracting function of obtaining ΔVᵢ = Vᵢ - V_{N+1} (i = 1, 2, ..., N). An optical signal failure detection signal producing circuit 704 is for detecting at least one of the optical signal loss signal (OLOS), the optical signal wavelength offset signal (OLOW), and the optical S/N ratio degradation signal (OSD) and has means for reporting the optical signal failure detection signal to the outside independently for each wavelength channel such as by means of lighting of a light emission diode when ΔVᵢ becomes equal to a predetermined threshold value Vₜₕ or less. If different threshold values V_{th-OLOS,} V_{th-OLOW'} and V_{th-OSD} are set for the optical signal loss signal (OLOS), the optical signal wavelength offset signal (OLOW), and the optical S/N ratio degradation signal (OSD), respectively, the three signals can be separately detected. It is noted here that a unique relationship among the three threshold values must preliminarily be determined, for example, as V_{th-OLOS} < V_{th-OLOW} < V_{th-OSD}. An optical signal failure detection signal detecting circuit 710 for detecting at least one of the optical signal loss signal (OLOS), the optical signal wavelength offset signal (OLOW), and the optical S/N ratio degradation signal (OSD) comprises the subtractor circuit 703 and the optical signal failure detection signal producing circuit 704 for at least one of the optical signal loss signal (OLOS), the optical signal wavelength offset signal (OLOW), and the optical S/N ratio degradation signal (OSD).

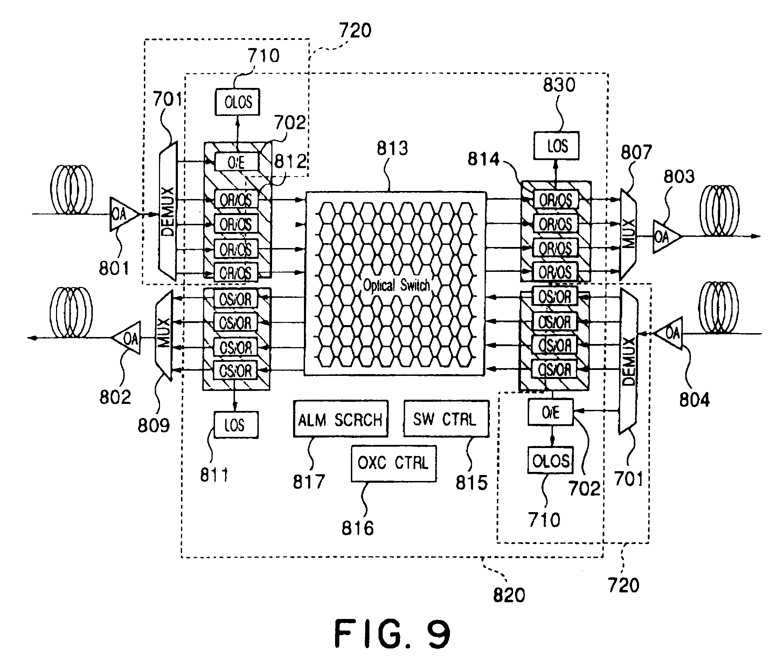

Fig. 9 shows a basic structure of an oxc 820 comprising the optical signal failure detecting unit 720.

The OXC 820 comprises an optical matrix switch (Optical Switch) 813 arranged at the center, a pair of the optical signal failure detecting units 720 arranged at the input sides of the optical matrix switch, and the wavelength demultiplexers 701 arranged at the input sides of the optical signal failure detecting units, respectively, and having a 2R function (wavelength regenerating, wavelength reshaping) or a 3R function (wavelength regenerating, wavelength reshaping, retiming).

One of the wavelength demultiplexers 701 that is connected to an optical repeater amplifier 801 is connected to the O/E converter 702 and the OR/OS's in an optical transceiver 812 which contains the O/E converter 702 for converting into the electric signal the amplified spontaneous emission (ASE) intensity as a reference light signal intensity required to detect at least one (optical signal failure detection signal) of the optical signal loss signal (OLOS), the optical signal wavelength offset signal (OLOW), and the optical S/N ratio degradation signal (OSD) and which is for carrying out optical transmission (os, optical Sender) and optical reception (OR, Optical Receiver). The optical transceiver 812 is externally connected to the optical signal failure detection signal detecting circuit 710 comprising the subtractor circuit 703 and the optical signal failure detection signal producing circuit 704 illustrated in Fig. 8, and to a signal loss signal (LOS) detecting circuit 811 (alternatively, these circuits may be contained therein). The OS/OR'S of the optical transceiver are connected to a wavelength multiplexer 809 having the 2R or the 3R function and the signal loss signal (LOS) detecting function and arranged at the output side. The wavelength multiplexer 809 is connected to an optical repeater amplifier 802. It is noted that the optical signal failure detection signal detecting circuit 710 and the signal loss signal (LOS) detecting circuit 811 may be contained in the optical transceiver 812. The O/E converter 702 may be arranged outside of the optical transceiver 812.

The other wavelength demultiplexer 701 connected to an optical repeater amplifier 804 is connected to the O/E converter 702 for converting into the electric signal the amplified spontaneous emission (ASE) intensity as the reference optical signal intensity required to detect the optical signal failure detection signal, and to OS/OR's in an optical transceiver 814 for optical transmission and reception. The optical transceiver 814 is connected to a signal loss signal (LOS) detecting circuit 830 and the O/E converter 702. The O/E converter 702 is connected to the optical signal failure detection signal detecting circuit 710. In the optical transceiver 814, the OR/OS's are connected to a wavelength multiplexer 807 having the 2R or the 3R function and the signal loss signal (LOS) detecting function and arranged at the output side. The wavelength multiplexer 807 is connected to an optical repeater amplifier 803. It is noted that the O/E converter 702, the optical signal failure detection signal detecting circuit 710, and the signal loss signal (LOS) detecting circuit 830 may be contained in the optical transceiver 814.

The OXC 820 comprises an optical signal failure detection signal collecting circuit (ALM SCRCH) 817 for collecting the optical signal failure detection signal, an optical switch controller (SW CTRL) 815 for controlling the optical matrix switch 813, and an OXC controller (OXC CTRL) 816 for controlling the optical signal failure detection signal collecting circuit 817 and the optical switch controller 815.

The OXC 820 is connected at its input side to the wavelength demultiplexer 701 and to the wavelength multiplexers 807 and 809 at its output side in order to deal with the wavelength-multiplexed optical signal. For compensation of the optical loss, the optical repeater amplifiers 801 and 804 are connected to the input side of the wavelength demultiplexer 701 while the optical repeater amplifiers 803 and 802 are connected to the output sides of the wavelength multiplexers 807 and 809, respectively.

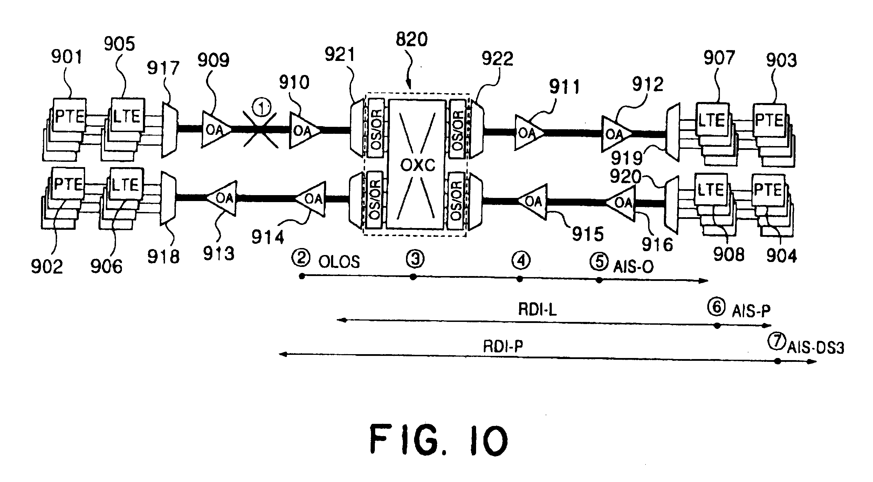

Next referring to Fig. 10, description will be made about an example where the OXC 820 is applied to the optical network system which deals with the optical signal with at least one wavelength wavelength-multiplexed and which comprises the path terminating equipments (PTE) and the line terminating equipments (LTE) based on the SONET/SDH standard in addition to the optical repeater amplifiers (OA).

In the optical network system, DSN (N = 1, 2, ...) signals terminated by the path terminating equipments (PTE) 901 are mapped by the line terminating equipments (LTE) 905 to STS-N (N = 1, 2, ...) signals to produce optical signals OC-N (N = 1, 2, ...). The optical signals are subjected to wavelength multiplexing by a wavelength multiplexer 917 and delivered to optical repeater amplifiers (OA) 909 and 910 and then through a wavelength demultiplexer 921 to the oxc 820, from the OXC 820 through a wavelength multiplexer 922 to optical repeater amplifiers (OA) 911 and 912 and a wavelength demultiplexer 919, further to the line terminating equipments (LTE) 907 in this order, and finally transmitted to the path terminating equipments (PTE) 903 (herein, DSN, STS-N, and OC-N represent signal classification used in the SONET and described, for example, in GR-253-CORE ISSUE 1, December 1994).

Reversely, signal transmission is performed from the path terminating equipments (PTE) 904 successively to the line terminating equipments (LTE) 908, a wavelength multiplexer 920, optical repeater amplifiers (OA) 916 and 915, and the OXC 820, further from the OXC 820 through optical repeater amplifiers (OA) 914 and 913 and a wavelength demultiplexer 918 to the line terminating equipments (LTE) 906 in this order to be finally transmitted to the path terminating equipments (PTE) 902.

Herein, each of the line terminating equipments (LTE) 905 through 908 and the path terminating equipments (PTE) 901 through 904 has an ordinary function based on the SONET/SDH standard. Each of the optical repeater amplifiers (OA) 909 through 916 has a function of collectively compensating transmission loss of the wavelength-multiplexed optical signal and an optical signal loss signal (OLOS) detecting function. Each of the optical repeater amplifiers (OA) 909 through 916 has means for interrupting, upon detection of the optical signal loss signal (OLOS), the signal light from the optical output to convert the optical signal loss signal (OLOS) to produce the network failure detection signal (AIS-O).

Each of the line terminating equipments (LTE) is a transmission line terminating equipment and has an alarm detecting function with respect to the signal loss signal (LOS), the LOF, the LOP, and the line alarm indication signal (AIS-L) and a function of reporting occurrence of the network failure upon detection of these alarms by converting the alarm signal to produce the RDI-L towards the upstream line terminating equipments (LTE) and by converting the alarm signal to produce the AIS-P towards the downstream path terminating equipments (PTE). The line terminating equipments (LTE) have a function of processing the automatic restoration and protection system (APS) of 1:N, 1+1, and 1:1 by the use of the protocol for the automatic restoration and protection system (APS) based on the SONET/SDH standard.

Each of the path terminating equipments (PTE) has an alarm detecting function with respect to the signal loss signal (LOS), the LOF, the LOP, and the AIS-P, and a function of converting, upon detection of these alarms, the alarm to produce the RDI-P towards the upstream path terminating equipments (PTE) and to produce the AIS-DS towards the downstream equipments.

In the above-mentioned optical network system, operation is carried out at first to detect the optical signal failure detection signal as at least one of the optical signal loss signal (OLOS), the optical signal wavelength offset signal (OLOW), and the optical S/N ratio degradation signal (OSD). This detecting operation will be described with reference to Fig. 8. It is assumed here that the optical signal light with at least one wavelength multiplexed is supplied to the optical repeater amplifier 705 having the APC function and that the input optical signal to be supplied to the optical repeater amplifier 705 is lost due to the network failure.

In this event, the optical repeater amplifier 705 is APC-controlled so that, before and after the loss of the input optical signal to be supplied to the optical repeater amplifier 705, the time-average optical intensity as the output of the optical repeater amplifier 705 is kept constant. This is because the APC circuit of the optical repeater amplifier 705 is operated to increase the optical gain of the optical repeater amplifier 705 in order to compensate the optical signal light intensity being lost and, as a result, the amplified spontaneous emission (ASE) intensity is excessively increased. In order to discriminate the signal light from the amplified spontaneous emission (ASE), the ratio between the signal component light intensity and the amplified spontaneous emission (ASE) intensity is calculated to obtain the optical S/N ratio which is used as a reference of judgement.

In Fig. 8, the wavelength demultiplexer 701 demultiplexes the wavelength-multiplexed signal light. The O/E converter 702 converts the light intensity into electric signals V₁ through V_{N} and V_{N+1} (which corresponds to the signal wavelengths λ1 through λ_{N} and the ASE V_{N+1}). Thereafter, the subtractor circuit 703 subtracts V_{N+1} from V₁ through V_{N} to obtain ΔV₁ through ΔV_{N}, respectively. If ΔV₁ through ΔV_{N} is less than the predetermined threshold value Vₜₕ, the optical signal failure detection signal producing circuit 704 for at least one of the optical signal loss signal (OLOS), the optical signal wavelength offset signal (OLOW), and the optical S/N ratio degradation signal (OSD) delivers to the outside the optical signal failure detection signal which is at least one of the optical signal loss signal (OLOS), the optical signal wavelength offset signal (OLOW), and the optical S/N ratio degradation signal (OSD). If the different threshold values V_{th-OLOS}, V_{th-OLOW}, and V_{th-OSD} are set for the optical signal loss signal (OLOS), the optical signal wavelength offset signal (OLOW), and the optical S/N ratio degradation signal (OSD), respectively, the three signals can be separately detected. It is noted here that a unique relationship among the three threshold values must preliminarily be determined, for example, as V_{th-OLOS} < V_{th-OLOW} < V_{th-OSD}.

Detection of the power of the optical signal may be carried out instead of detection of the optical *S/N* ratio. In this case, the optical signal failure detection signal producing circuit 704 detects a failure of the optical signal and produces a failure detection signal when the power of the optical signal is less than the predetermined value.

Now, description will be made about the operation of the OXC 820 illustrated in Fig. 9 with the optical signal failure detecting function for at least one of the optical signal loss signal (OLOS), the optical signal wavelength offset signal (OLOW), and the optical S/N ratio degradation signal (OSD).

Herein, the optical signal is at first supplied to the OR/OS's of the optical transceiver 812 and subjected to optical waveform shaping and, if necessary, wavelength conversion. Simultaneously, the amplified spontaneous emission (ASE) similar in optical intensity and in wavelength band to the amplified spontaneous emission (ASE) contained in the signal light is converted by the O/E converter 702 into the electric signal which is supplied as a reference signal to the optical signal failure detection signal detecting circuit 710 connected to the OR/OS's of the optical transceiver 812 for detecting the optical signal failure detecting signal as at least one of the optical signal loss signal (OLOS), the optical signal wavelength offset signal (OLOW), and the optical S/N ratio degradation signal (OSD).

The optical signal failure detection signal detecting circuit 710 is for detecting the optical signal failure detection signal as at least one of the optical signal loss signal (OLOS), the optical signal wavelength offset signal (OLOW), and the optical S/N ratio degradation signal (OSD) and transmits the detection signal to the optical signal failure detection signal collecting circuit 817 independently for each channel. In this case, the alarm collecting circuit 817 reports to the OXC controller 816 occurrence of the optical signal failure detection signal and its channel. If necessary, in accordance with a predetermined scenario, the OXC controller 816 transmits to the optical switch controller 815 the information required in ON/OFF control of the optical matrix switch 813. The optical switch controller 815 performs ON/OFF control of the optical matrix switch 813 in response to the command supplied from the OXC controller 816 and thus executes the optical path switching operation. The optical signal passing through the optical matrix switch 813 is again subjected to optical waveform shaping and, if necessary, the wavelength conversion by a pair of the OR/OS's in the output-side optical transceiver 814 to be outputted from the OXC 820.

Herein, the following function is provided. Specifically, when the optical signal failure detection signal for at least one of the optical signal loss signal (OLOS), the optical signal wavelength offset signal (OLOW), and the optical S/N ratio degradation signal (OSD) is detected in the channel at the input side of the OXC 820, the signal light from the optical output of the OXC 820 corresponding to that channel is interrupted. In this manner, any one or ones of the optical signal loss signal (OLOS), the optical signal wavelength offset signal (OLOW), and the optical S/N ratio degradation signal (OSD) are converted into the network failure detection signal (AIS-O). The interruption of the optical output may be carried out by the optical matrix switch 813 or by interrupting the signal light from the optical output of the OR/OS in the optical transceiver 814 arranged at the output side of the OXC 820. Alternatively, a combination of the above-mentioned techniques may be used. The interruption of the optical output of the OXC 820 is enabled by controlling the optical switch controller 815 optical matrix switch or the OR/OS of the optical transceiver 814 from the optical signal failure detection signal collecting circuit 817 through the OXC controller 816, triggered by detection of the optical signal failure detection signal as at least one of the optical signal loss signal (OLOS), the optical signal wavelength offset signal (OLOW), and the optical S/N ratio degradation signal (OSD).

Referring to Fig. 10 again, the operation of the optical network system comprising the OXC 820 will be described. Herein, description will be made about how the optical signal failure detection signal is transmitted from the optical layer to the DS path layer when the optical signal is interrupted at ① .

It is assumed that the optical signal is interrupted at ① , for example, by optical fiber cut. In this event, the optical repeater amplifier (OA) 910 detects the optical signal failure detection signal for at least one of the optical signal loss signal (OLOS), the optical signal wavelength offset signal (OLOW), and the optical S/N ratio degradation signal (OSD) and interrupts the signal light from the optical output. Thus, at ② , the optical signal failure detection signal for at least one of the optical signal loss signal (OLOW), the optical signal wavelength offset signal (OLOW), and the optical S/N ratio degradation signal (OSD) is converted into the network failure detection signal (AIS-O).

Since the network failure detection signal (AIS-O) is produced by intentional interruption of the optical signal output, the OXC 820 also detects the optical signal failure detection signal for at least one of the optical signal loss signal (OLOS), the optical signal wavelength offset signal (OLOW), and the optical S/N ratio degradation signal (OSD) and interrupts the signal light from the optical output. Attention will herein be directed to the optical input/output of the OXC 820. Then, it will be understood that the network failure detection signal (AIS-O) representative of the intentional interruption of the optical signal is once terminated by the OXC 820 and, at ③ , the (AIS-O) is again produced in the OXC 820 and outputted from the OXC 820. Similar operation is carried out in the optical repeater amplifier (OS) 911 at ④ or the optical repeater amplifier (OA) 912 at ⑤ .

Therefore, it is understood that the optical signal failure detection signal as at least one of the optical signal loss signal (OLOS), the optical signal wavelength offset signal (OLOW), and the optical S/N ratio degradation signal (OSD) detected by the optical repeater amplifier (OS) 910 is converted by the optical repeater amplifier (OA) 910 into the network failure detection signal (AIS-O) and propagated through the optical layer. At ⑥ , the network failure detection signal (AIS-O) is converted by the line terminating equipments (LTE) 907 into the AIS-P towards the path terminating equipments (PTE) 903 and is converted into the RDI-L towards the line terminating equipments (LTE) 905 to report occurrence of the network failure.

At ⑦ , the path terminating equipments (PTE) 903 convert the AIS-P into the AIS-DS towards an end user and into the RDI-P towards the path terminating equipments (PTE) 901 to report the occurrence of the network failure. Between the line terminating equipments (LTE) 907 and the line terminating equipments (LTE) 905, the automatic restoration and protection system (APS) is activated to perform restoration from the network failure.

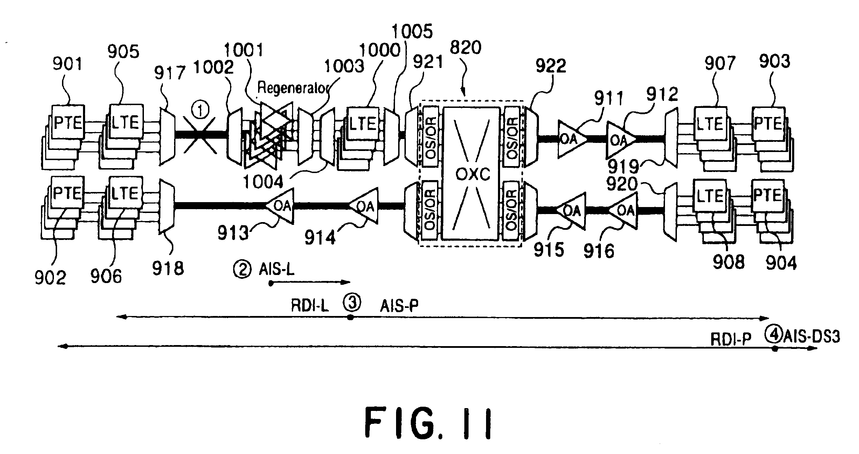

On the other hand, Fig. 11 shows another example of the optical network system which comprises the signal regenerators based on the SONET/SDH standard, the line terminating equipments (LTE), the path terminating equipments (PTE), the optical repeater amplifiers (OA), and the oxc 820 and which deals with an optical signal with at least one wavelength wavelength-multiplexed. In the following, the system will be described.

In the optical network system, DSN (N = 1, 2, ...) signals terminated by the path terminating equipments (PTE) 901 are mapped by the line terminating equipments (LTE) 905 to STS-N (N = 1, 2, ...) signals to produce optical signals OC-N (N = 1, 2, ...). These signals are supplied to the wavelength multiplexer 917 to be wavelength multiplexed by at least one wavelength. The wavelength-multiplexed signal is delivered through a wavelength demultiplexer 1002 to the signal regenerators 1001, further from the signal regenerators 1001 through a wavelength multiplexer 1003, a wavelength demultiplexer 1004, line terminating equipments (LTE) 1000, a wavelength multiplexer 1005, and a wavelength demultiplexer 921 to the oxc 820, further from the OXC 820 through a wavelength multiplexer 922, the optical repeater amplifiers (OA) 911 and 912, and a wavelength demultiplexer 919 to the line terminating equipments (LTD) 907 in this order, to be finally transmitted to the path terminating equipments (PTE) 903.

Reversely, signal transmission is performed from the path terminating equipments (PTE) 904 successively to the line terminating equipments (LTE) 908, a wavelength multiplexer 920, the optical repeater amplifiers (OA) 916 and 915, and the OXC 820, further from the OXC 820 through the optical repeater amplifiers (OA) 914 and 913 and the wavelength demultiplexer 918 to the line terminating equipments (LTE) 906 in this order to be finally transmitted to the path terminating equipments (PTE) 902.

Herein, each of the line terminating equipments (LTE) 905 through 908 and the path terminating equipments (PTE) 901 through 904 has an ordinary function based on the SONET/SDH standard. The signal regenerators have an optical waveform shaping function, an alarm detecting function of detecting the signal loss failure signal (LOS) and the LOF, and a function of converting the alarm to produce (AIS-L) towards the upstream line terminating equipments (LTE) upon detection of these alarms.

The oxc 820 has the structure described in conjunction with Fig. 9. The optical repeater amplifier (OA) has a function of collectively compensating transmission loss of the wavelength-multiplexed optical signal, and the apparatus (optical signal failure detecting unit 720) for detecting the optical signal failure for at least one of the optical signal loss signal (OLOS), the optical signal wavelength offset signal (OLOW), and the optical S/N ratio degradation signal (OSD). The optical repeater amplifier (OA) is installed with means for converting, by interruption of the signal light from optical output upon detection of the optical signal loss, the optical signal loss signal (OLOS) to produce the network failure detection signal (AIS-O).

The line terminating equipment (LTE) is a transmission line terminating equipment and has an alarm detecting function for the signal loss signal (LOS), the LOF, the LOP, and the line alarm indication signal (AIS-L) as well as a function of reporting, upon detection of these alarms, occurrence of the network failure by converting the alarm signal to produce the RDI-L towards the upstream line terminating equipments (LTE) and by converting the alarm signal to produce the AIS-P towards the downstream path terminating equipments (PTE). The line terminating equipment (LTE) has a function of processing the automatic restoration and protection system (APS) of 1:N, 1+1, and 1:1 by the use of the protocol for the automatic restoration and protection system (APS) based on the SONET/SDH standard.

The path terminating equipments (PTE) have an alarm detecting function for the signal loss signal (LOS), the LOF, the LOP, and the AIS-P, and a function of converting the alarm to produce the RDI-P towards the upstream path terminating equipments (PTE) and converting the alarm to produce the AIS-DS towards the downstream equipments upon detection of these alarms.

Referring to Fig. 11, operation of the optical network system will be described. It is assumed that the optical signal is lost, for example, by optical fiber cut at ① . In this event, the signal regenerators 1001 detect the signal loss signal (LOS) and produce the line alarm indication signal (AIS-L) towards the upstream line terminating equipments (LTE) to report the occurrence of the network failure. If the signal regenerators 1001 are simply added to the structure in Fig. 10, the OXC 820 can not detect the optical signal failure detection signal for at least one of the optical signal loss signal (OLOS), the optical signal wavelength offset signal (OLOW), and the optical S/N ratio degradation signal (OSD). This is because, even if the optical signal is lost at ① , the signal regenerators 1001 regenerate some signal so that no network failure detection signal (AIS-O) is produced in the optical layer. It is therefore impossible to report the occurrence of the network failure to the line terminating equipments (LTE) 907.

However, with the wavelength demultiplexer 1002 and the wavelength multiplexer 1003 arranged at input and output sides of the signal regenerators 1001 as illustrated in Fig. 11, the wavelength demultiplexer 1002 can recognize the line alarm indication signal (AIS-L). It is therefore possible to perform restoration from the network failure by the use of the automatic restoration and protection system (APS) and the OXC 820. At this time, the optical signal failure detection signal is propagated in the following manner.

At ② , the signal regenerators 1001 detect the signal loss signal (LOS) which is converted into the line alarm indication signal (AIS-L) so that the occurrence of the network failure is reported to the wavelength demultiplexer 1002. At ③ , the line alarm indication signal (AIS-L) is converted by the wavelength demultiplexer 1002 into the AIS-P towards the path terminating equipments (PTE) 903 and into the RDI-L towards the line terminating equipments (LTE) 905 so that the occurrence of the network failure is reported.

At ④ , the path terminating equipments (PTE) 903 convert the AIS-P into the AIS-DS towards end users and into the RDI-P towards the path terminating equipments (PTE) 901 to report the occurrence of the network failure. Between the line terminating equipments (LTE) 907 and the line terminating equipments (LTE) 905, the automatic restoration and protection system (APS) is activated to perform restoration from the network failure.

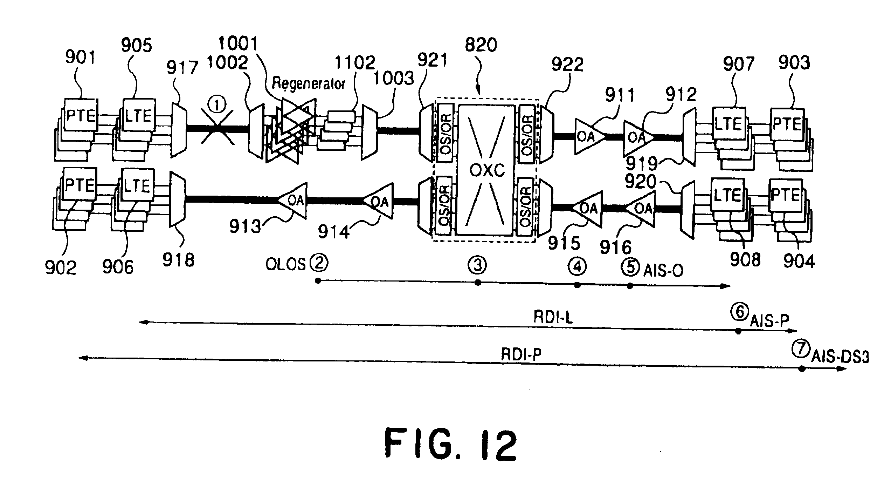

On the other hand, Fig. 12 shows another example of the optical network system which comprises the signal regenerators based on the SONET/SDH standard with the optical signal failure detecting function for at least one of the optical signal loss signal (OLOS), the optical signal wavelength offset signal (OLOW), and the optical S/N radio degradation signal (OSD) and the network failure detection signal (AIS-O) producing function, the line terminating equipments (LTE), the path terminating equipments (PTE), the OXC 820, the optical repeater amplifiers (OA) and which deals with the optical signal with at least one wavelength wavelength-multiplexed. In the following, the system will be described.

In the optical network system, DSN (N = 1, 2, ...) signals terminated by the path terminating equipments (PTE) 901 are mapped by the line terminating equipments (LTE) 905 to STS-N (N = 1, 2, ...) signals to produce optical signals OC-N (N = 1, 2, ...). These signals are supplied to the wavelength multiplexer 917 to be wavelength multiplexed by at least one wavelength. The wavelength-multiplexed signal is delivered through the wavelength demultiplexer 1002 to the signal regenerators 1001, from the signal regenerators 1001 through optical gate switches 1102, the wavelength multiplexer 1003, the wavelength demultiplexer 921 to the OXC 820, from the OXC 820 through the wavelength multiplexer 922, the optical repeater amplifiers (OA) 911 and 912, and the wavelength demultiplexer 919 to the line terminating equipments (LTD) 907 in this order, to be finally transmitted to the path terminating equipments (PTE) 903.

Reversely, signal transmission is performed from the path terminating equipments (PTE) 904 successively to the line terminating equipments (LTE) 908, the wavelength multiplexer 920, the optical repeater amplifiers (OA) 916 and 915, and the OXC 820, further from the OXC 820 through the optical repeater amplifiers (OA) 914 and 913 and the wavelength demultiplexer 918 to the line terminating equipments (LTE) 906 in this order, to be finally transmitted to the path terminating equipments (PTE) 902.

Herein, each of the line terminating equipments (LTE) 905 through 908 and the path terminating equipments (PTE) 901 through 904 has an ordinary function based on the SONET/SDH standard. The signal regenerators 1001 have a structure based on the SONET/SDH standard with the function of detecting the optical signal failure for at least one of the optical signal loss signal (OLOS), the optical signal wavelength offset signal (OLOW), and the optical S/N ratio degradation signal (OSD) and the network failure detection signal (AIS-O) producing function. The signal regenerators 1001 have the optical waveform shaping function, the alarm detecting function for the signal loss signal (LOS) and the LOF, and the function of converting, upon detection of these alarms, the alarm to produce the line alarm indication signal (AIS-L) towards the upstream line terminating equipments (LTE), and have the apparatus (optical signal failure detecting unit 720) for detecting the optical signal loss for at least one of the optical signal loss signal (OLOS), the optical signal wavelength offset signal (OLOW), and the optical S/N ratio degradation signal (OSD). Upon detection of the optical signal failure detection signal as at least one of the optical signal wavelength offset signal (OLOW) and the optical S/N ratio degradation signal (OSD), the signal regenerators 1001 can produce the network failure detection signal (AIS-O) by closing the optical gate switches 1102 to interrupt the signal light from the optical output, or by converting the optical signal failure detection signal for at least one of the optical signal wavelength offset signal (OLOW) and the optical S/N ratio degradation signal (OSD).

The oxc 820 has the structure illustrated in Fig. 9. The optical repeater amplifier (OA) has the function of collectively compensating the transmission loss of the wavelength-multiplexed optical signal, and the optical signal loss signal (OLOS) detecting function. The optical repeater amplifier (OA) is installed with means for converting, by interruption of the signal light from the optical output upon detection of the optical signal loss signal (OLOS), the optical signal loss signal (OLOS) to produce the network failure detecting signal (AIS-O). Furthermore, the optical repeater amplifier (OA) has the function of collectively compensating transmission loss of the wavelength-multiplexed optical signal, the apparatus (optical signal failure detecting unit 720) for detecting the optical signal failure for at least one of the optical signal loss signal (OLOS), the optical signal wavelength offset signal (OLOW), and the optical S/N ratio degradation signal (OSD), and means for converting, by interruption of the signal light from the optical output upon detection of the optical signal loss, the optical signal loss signal (OLOS) to produce the network failure detection signal (AIS-O).

The line terminating equipment (LTE) is the transmission line terminating equipment and has the alarm detecting function for the signal loss signal (LOS), the LOF, the LOP, and the line alarm indication signal (AIS-L) as well as a function of reporting, upon detection of these alarms, occurrence of the network failure by converting the alarm signal to produce the RDI-L towards the upstream line terminating equipments (LTE) and by converting the alarm signal to produce the (AIS-P) towards the downstream path terminating equipments (PTE). The line terminating equipment (LTE) has the function of processing the automatic restoration and protection system (APS) of 1:N, 1+1, and 1:1 by the use of the protocol for the automatic restoration and protection system (APS) based on the SONET/SDH standard.

The path terminating equipments (PTE) have the alarm detecting function for the signal loss signal (LOS), the LOF, the LOP, and the AIS-P, and the function of converting the alarm to produce the RDI-P towards the upstream path terminating equipments (PTE) and converting the alarm to produce the AIS-DS towards the downstream equipments upon detection of these alarms.

Referring to Fig. 12, operation of the optical network system will be descried. It is assumed that the optical signal is lost, for example, by optical fiber cut at ① . In this event, the signal regenerators 1001 detect the signal loss signal (LOS) and produce the line alarm indication signal (AIS-L) towards the upstream line terminating equipments (LTE) to report the occurrence of the network failure. If the signal regenerators 1001 are simply added to the structure in Pig. 10, the OXC 820 can not detect the optical signal loss signal (OLOS).

This is because, even if the optical signal is lost at ① , the signal regenerators 1001 regenerate some signal so that no network failure detection signal (AIS-O) is produced in the optical layer. It is therefore impossible to report the occurrence of the network failure to the line terminating equipments (LTE) 907.

On the other hand, with the network failure detection signal (AIS-O) producing function added to the signal regenerators 1001, it is possible to perform restoration of the network failure by the automatic restoration and protection system (APS) and the oxc 820. At this time, the optical signal failure detection signal is propagated in the following manner.

At ② , the signal regenerators 1001 detect the optical signal loss signal (OLOS) and the optical gate switches 1102 are closed. Thus, the optical signal loss signal (OLOS) is converted to produce the network failure detection signal (AIS-O) in the optical layer so that the occurrence of the network failure is reported to the OXC 820 downstream. At ⑥ , the network failure detection signal (AIS-O) is converted by the line terminating equipments (LTE) 907 into the AIS-P towards the path terminating elements (PTE) 903 and into the RDI-L towards the line terminating equipments (LTE) 905 so that the occurrence of the network failure is reported.

At ⑦ , the path terminating equipments (PTE) 903 convert the AIS-P into the AIS-DS towards an end user and into the RDI-P towards the path terminating equipments (PTE) 901 so that the occurrence of the network failure is reported. Between the line terminating equipments (LTE) 907 and the line terminating equipments (LTE) 905, the automatic restoration and protection system (APS) is activated to perform restoration of the network failure.

In the above-mentioned several optical network systems, the primary signal light with N (N = 1, 2, 3, ...) wavelengths wavelength-multiplexed may have a wavelength band of 1.5 µm or 1.3 µm. The optical matrix switch 813 may be replaced by an equivalent optical matrix switch comprising a combination of 1:1 optical switches arranged in a matrix fashion. The wavelength demultiplexer 701 may comprise an arrayed waveguide grating (AWG: Arrayed Waveguide Grating) having N:M input/output ports. Alternatively, use may be made of a combination of a number of optical bandpass filters having 1:1 input/output ports, which is equivalent to an N:M input/output wavelength demultiplexer. In addition, no limitation is imposed upon the signal transmission speed of at least one pair of OR/OS mounted in the OXC 820. For example, use may be made of a combination of OR/OS pairs capable of dealing with those signals up to 10Gb/s and OR/OS pairs capable of dealing with signals up to 2.5Gb/s. No limitation is imposed upon the technique how the optical signal failure detection signal collecting circuit 817 retrieves the optical signal failure detection signal from the optical signal failure detection signal producing circuit 704. For example, use may be made of interrupt control or serial control. Furthermore, no limitation is imposed upon the manner how the OXC controller 816 controls those apparatuses connected thereto. For example, interrupt control or serial control may be used. In addition, the subtractor circuit 703 may be omitted from the optical signal failure detecting unit 720 for at least one of the optical signal loss signal (OLOS), the optical signal wavelength offset signal (OLOW), and the optical S/N ratio degradation signal (OSD). In this event, detection of the optical signal loss is carried out by the use of the optical signal intensity instead of the optical S/N ratio.

As described above, according to this invention, the signal loss signal (LOS), the LOF, the LOP, the BER, and the line alarm indication signal (AIS-L) are newly adopted as the alarms in the SONET/SDH layer. The optical signal loss signal (OLOS), the optical signal wavelength offset signal (OLOW), the optical S/N ratio degradation signal (OSD), and the network failure detection signal (AIS-O) are re-defined as the optical signal failure detection signals in the optical layer. Thus, detection of the optical signal failure occurring within the optical network is performed at a high speed. By omission of reading/writing operations of the network failure information (AIS) in the optical cross connect, the network failure detecting time is shortened. Therefore, it is possible to quickly perform restoration from the failure in the optical network using optical cross connect. In the optical cross connect, hardware for processing the network failure information (AIS) is no longer necessary and no control of the network failure information (AIS) processing is required so as to simplify the control of the optical cross connect. Therefore, the amount of hardware to be mounted on the optical cross connect can be reduced so as to achieve reduction in hardware for establishment of the system, in size, and in cost. The network failure detected in the optical layer by the optical signal failure detection signal as at least one of the optical signal loss signal (OLOS), the optical signal wavelength offset signal (OLOW), and the optical S/N ratio degradation signal (OSD) is converted into the network failure detection signal (AIS-O) which can be detected in the SONET layer like the conventional signal loss signal (LOS). It is further possible for the line terminating equipments to recognize the failure detected in the optical layer and to activate the automatic restoration and protection system (APS). This makes it possible to avoid the conflict with the existing SONET/SDH-standard automatic restoration and protection system (APS) and to keep compatibility. In addition, the optical S/N ratio is monitored by calculating the ratio between the signal component light intensity and the amplified spontaneous emission (ASE) intensity. Therefore, even if the amplified spontaneous emission (ASE) intensity is varied, it is possible to accurately detect presence or absence of the signal light. Thus, even if the amplified spontaneous emission (ASE) intensity within the optical network is varied by the optical repeater amplifier under APC control, monitoring of the optical signal loss can be accurately performed by monitoring the optical S/N ratio, as compared with the use of the signal loss signal (LOS) of the SONET/SDH standard.

## Claims

1. An optical signal failure monitoring method of monitoring a failure of an optical signal of a signal wavelength, characterized by the steps of:
calculating an optical S/N ratio of a power of said optical signal to another power of a spontaneous emission light of a different wavelength which is different from said signal wavelength; and
detecting said failure of the optical signal to produce a failure detection signal when said optical S/N ratio is less than a predetermined value.

2. A method as claimed in claim 1, wherein said calculating step is for calculating, as said optical S/N ratio, a difference given by subtracting the power of said spontaneous emission light from the power of said optical signal.

3. An optical signal failure monitoring method of monitoring a failure of an optical signal of a signal wavelength, characterized by the steps of:
detecting a power of said optical signal; and
detecting said failure of the optical signal to produce a failure detection signal when the power of said optical signal is less than a predetermined value.

4. A method as claimed in claim 1,2, or 3 characterized in that
said failure of the optical signal is an optical loss of said optical signal;
said detecting step producing the failure detection signal representing that said failure is the optical loss of said optical signal.

5. A method as claimed in claim 1,2 or 3 characterized in that:
said failure of the optical signal is an optical signal degradation;
said latter detecting step producing the failure detection signal representing that said failure is the optical signal degradation.

6. An optical signal failure monitoring method as claimed in claim *1,* 2, or 3 characterized in that :
said failure of the optical signal is an offset of the signal wavelength of said optical signal;
said latter detecting step producing the failure detection signal representing that said failure is the offset of the signal wavelength of said optical signal.

7. An optical signal failure monitoring apparatus for monitoring a failure of an optical signal of a signal wavelength, characterized by:
calculating means for calculating an optical S/N ratio of a power of said optical signal to another power of a spontaneous emission light of a different wavelength which is different from said signal wavelength; and
detecting means for detecting said failure of the optical signal to produce a failure detection signal when said optical S/N ratio is less than a predetermined value.

8. An optical signal failure monitoring apparatus as claimed in claim 7 characterized in that said calculating means is for calculating, as said optical S/N ratio, a difference given by subtracting the power of said spontaneous emission light from the power of said optical signal.

9. An optical signal failure monitoring apparatus for monitoring a failure of an optical signal of a signal wavelength, characterized by:
first detecting means for a power of said optical signal; and
second detecting means for detecting said failure of the optical signal to produce a failure detection signal when the power of said optical signal is less than a predetermined value.

10. An optical signal failure monitoring apparatus as claimed in claim 7, 8 or 9 characterized in that :
said failure of the optical signal is an optical loss of said optical signal;
said detecting means producing the failure detection signal representing that said failure is the optical loss of said optical signal.

11. An optical signal failure monitoring apparatus as claimed in claim 7,8 or 9 characterized in that :
said failure of the optical signal is an optical signal degradation;
said detecting means producing the failure detection signal representing that said failure is the optical signal degradation.

12. An optical signal failure monitoring apparatus as claimed in claim 7,8 or 9 characterized in that:
said failure of the optical signal is an offset of the signal wavelength of said optical signal;
said detecting means producing the failure detection signal representing that said failure is the offset of the signal wavelength of said optical signal.

13. An optical repeater amplifier comprising the optical signal failure monitoring apparatus claimed in any one of claims 7 to 12.

14. An optical cross-connect system comprising the optical signal failure monitoring apparatus claimed in any one of claims 7 to 12.

15. A signal regenerator comprising the optical signal failure monitoring apparatus claimed in any one of claims 7 to 12.
